# EUROPEAN PATENT APPLICATION

(11) **EP 4 852 515 A1**
(43) Date of publication of application: **09.12.2026**
(21) Application number: 24920917.2
(22) Date of filing: 31.01.2024
(51) Int. Cl.: H04W 36/00

(54) **CELL SWITCH METHOD AND APPARATUS**

(71) Applicant: 1FINITY INC., Kawasaki-shi, Kanagawa 211-8588 (JP)
(72) Inventor: JIA, Meiyi, Beijing 100022 (CN); YI, Su, Beijing 100022 (CN); GENG, Tingting, Beijing 100022 (CN)
(74) Representative: Haseltine Lake Kempner LLP
(86) International application number: PCT/CN2024/075076
(87) International publication number: WO 2025/160850

(57) **Abstract**

Embodiments of the present disclosure provide a cell switch method and an cell switch apparatus, the method comprising that: a terminal equipment receives a candidate configuration and an execution condition transmitted by a network device; and the terminal equipment performs a first action when a first condition is satisfied, the first action comprising applying a target configuration and not comprising performing a second random access procedure, and the target configuration being one configuration that satisfies the first condition in the candidate configuration transmitted by the network device. According to embodiments of the present disclosure, the terminal equipment is able to implement terminal equipment-triggered LTM execution or CHO execution, and is able to obtain corresponding information to perform corresponding processing, thereby avoiding or reducing a mobility failure or a radio link failure caused by being unable to receive a trigger order from a network device, and improving robustness.

## Description

### TECHNICAL FIELD

Embodiments of the present disclosure relate to the technical field of communications.

### BACKGROUND

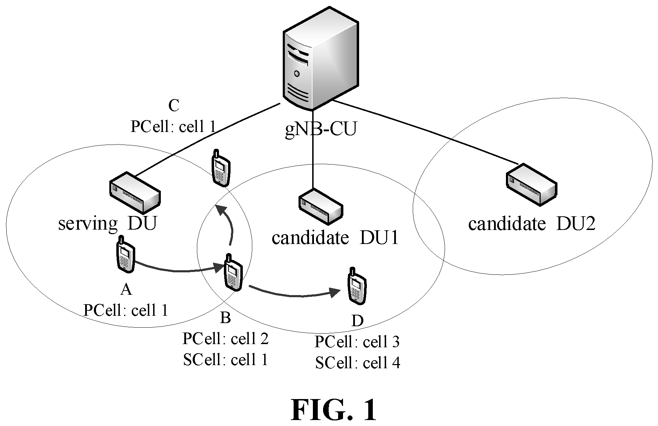

Network-controlled mobility applies to terminals in a connected state, and is categorized into two types of mobility: cell-level mobility and beam-level mobility. FIG. 1 is a schematic diagram of an inter-cell mobility scenario. As shown in FIG. 1, when a terminal moves from a coverage area of a cell to another cell, a serving cell change needs to be performed at some point.

Currently, a serving cell change is triggered by L3 measurement, and is done by Radio Resource Control (RRC) signaling triggered Reconfiguration with Synchronisation for change of primary cell (PCell) and primary secondary cell (PSCell), as well as release add for secondary cells (SCells) when applicable. Cell-level mobility requires explicit RRC signaling to be triggered, i.e., handover. A handover mechanism triggered by RRC requires a UE (called a terminal equipment, a user equipment, a terminal, a user, etc.) at least to reset a Media Access Control (MAC) entity and re-establish Radio Link Control (RLC). RRC-managed handover with or without a Packet Data Convergence Protocol (PDCP) entity re-establishment are both supported. For data radio bearers (DRBs) using an RLC acknowledged mode (RLC AM), a PDCP may either be re-established together with a security key change or initiate a data recovery procedure without a key change. For DRBs using an RLC unacknowledged mode (RLC UM), a PDCP may either be re-established together with a security key change or remain as it is without a key change. For signaling radio bearers (SRBs), a PDCP may either remain as it is, discard its stored PDCP packet data units (PDUs) /service data units (SDUs) without a key change or be re-established together with a security key change.

For an RRC-triggered handover mechanism, all cases involve complete L2 (and L1) resets, leading to longer latency, larger overhead and longer interruption time than beam switch mobility. A goal of L1 (layer 1)/L2 (layer 2) mobility enhancements is to enable a serving cell change via L1/L2 signaling, in order to reduce latency, overhead, and interruption time.

L1/L2 Triggered Mobility (LTM) is a procedure in which a gNB (also called a network device, a network, a base station, etc.) receives L1 measurement report(s) from a UE, and on their basis the gNB may change UE serving cell by a cell switch command signalled via a MAC Control Element (MAC CE). A MAC-triggered cell switch mechanism (i.e., LTM cell switch) requires a UE to at least reset a MAC entity. RLC processing depends on a network configuration.

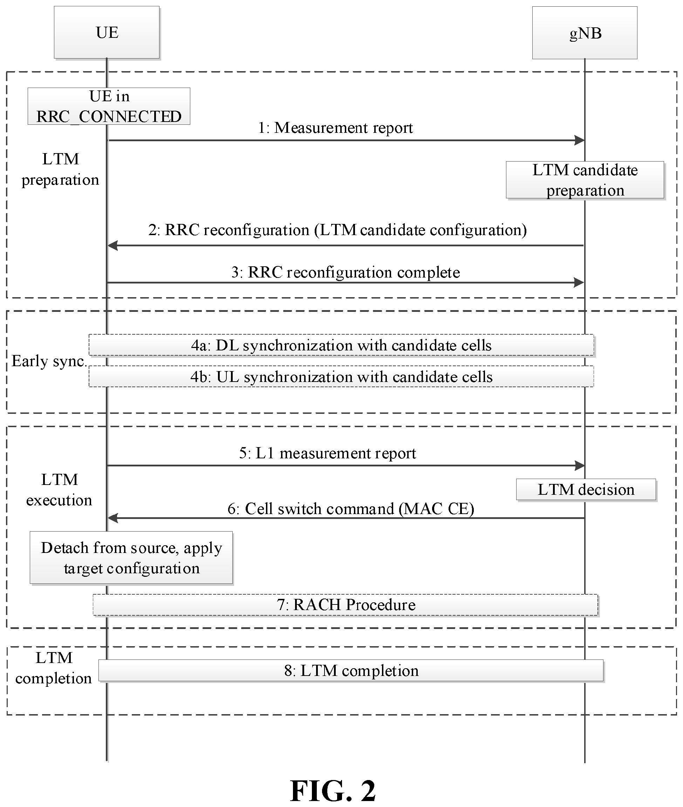

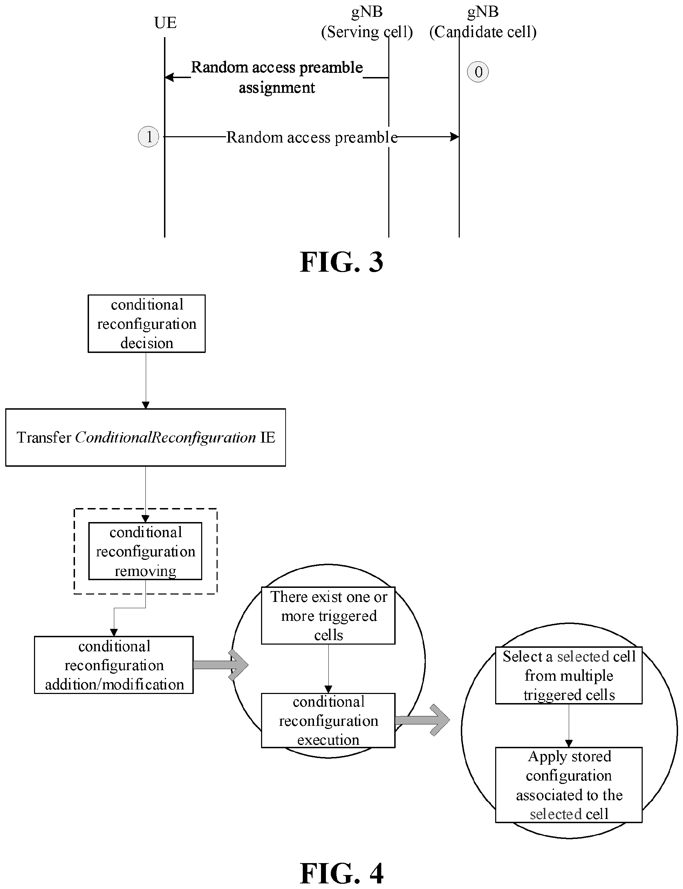

FIG. 2 is a schematic diagram of an overall procedure of LTM. A basic procedure on an air interface is applicable to MCG LTM or SCG LTM. As shown in FIG. 2, the procedure includes the following steps:
1. A UE transmits a *MeasurementReport* message to a gNB, wherein a gNB-CU decides to configure LTM and initiates LTM preparation;
2. The gNB transmits a *RRCReconfiguration* message including an LTM candidate configuration to the UE;
3. The UE stores the LTM candidate configuration and transmits an *RRCReconfigurationComplete* message to the gNB;
4a. Before receiving a cell switch command, the UE performs downlink (called DL for short) synchronization with candidate cell(s);
4b. When UE-based Timing Advance (TA) measurement is configured, the UE acquires TA value(s) of the candidate cell(s) by measurement;
   It is worth noting that before receiving the cell switch command, as request by the network, the UE performs early TA acquisition with the candidate cell(s). This is done via Contention Free Random Access (CFRA) triggered by a Physical Downlink Control Channel (PDCCH) order from a source cell, following which the UE transmits a preamble towards an indicated candidate cell, as shown in FIG. 3, FIG. 3 is a schematic diagram of a random access procedure. To minimize data interruption of the source cell due to CFRA towards the candidate cell(s), the UE does not receive a random access response from the network for the purpose of TA value acquisition, and the TA value of the candidate cell is indicated in the cell switch command. The UE does not maintain a TA timer for the candidate cell but relies on network implementation to guarantee the TA validity.
5. The UE performs L1 measurement on configured candidate cell(s) and transmits L1 measurement report(s) to the gNB; wherein as long as RRC reconfiguration (step 2) is applicable, the L1 measurement should be performed.
6. The gNB decides to execute cell switch to a target cell and transmits a MAC CE for triggering the cell switch including a candidate configuration index of the target cell. The UE switches to the target cell and applies a configuration indicated by the candidate configuration index.
7. If the UE does not have a valid TA of the target cell, the UE performs a random access procedure towards the target cell.
8. The UE completes the LTM cell switch procedure by transmitting an *RRCReconfigurationComplete* message to the target cell.

It is worth noting that if the UE has performed a random access procedure in step 7, when the random access procedure is successfully completed, the UE considers that LTM cell switch execution is successfully completed. For RACH-less LTM, i.e., when step 7 is not performed, the UE considers that LTM cell switch execution is successfully completed when the UE determines that the network has successfully received its first UL data.

Moreover, for a random access procedure towards an LTM candidate cell for early UL TA acquisition, CFRA triggered by a PDCCH order is used. As shown in FIG. 3, the UE transmits MSG1 (Message 1) towards the cell without monitoring for a response from the cell. To support UE power ramping, the UE may perform MSG1 retransmission according to a network indication.

In addition, for subsequent LTM, steps 4-8 can be performed multiple times using the LTM candidate configuration(s) provided in step 2. That is, the subsequent LTM is done by repeating early synchronization, LTM cell switch execution and LTM cell switch completion steps without the need to release other LTM candidate configurations after each LTM cell switch completion.

The foregoing is network-triggered cell switch.

For terminal-initiated cell switch and for a UE in an RRC connected state (RRC_CONNECTED state), terminal-triggered mobility at least includes: conditional reconfiguration, and recovery of a Radio Link Failure (RLF) or a cell failure on a Master Cell Group (MCG). The conditional reconfiguration includes Conditional Handover (CHO) and Conditional PSCell Addition/Change (CPAC).

For the conditional reconfiguration:
A network configures a terminal with one or more candidate target special cells (SpCells) in the conditional reconfiguration. The terminal evaluates a condition of each configured candidate target special cell. The terminal applies conditional reconfiguration associated with one of target cells which fulfils associated execution condition.

FIG. 4 is a schematic diagram of a UE behavior for conditional reconfiguration.

As shown in FIG. 4, based on a received *ConditionalReconfiguration* IE, the UE performs the following behaviors:
if the *ConditionalReconfiguration* includes *condReconfigToRemoveList:* performing a conditional reconfiguration removal procedure; and
if the *ConditionalReconfiguration* includes *condReconfigToAddModList:* performing conditional reconfiguration addition/modification.

The conditional reconfiguration addition/modification includes:
for each *condReconfigld* received in the *condReconfigToAddModList,* the UE will:
if an entry matching the *condReconfigld* exists in the *condReconfigToAddModList* within *VarConditionalReconfig:*
if this entry in the *condReconfigToAddModList* includes *condExecutionCond, condExecutionCondSCG,* or *condExecutionCondPSCell:* replace this entry with a value received for this *condReconfigId*;
if this entry in the *condReconfigToAddModList* includes *condRRCReconfig:* replace this entry with a value received for this *condReconfigId*;
otherwise, add a new entry in the *VarConditionalReconfig* for this *condReconfigId;* perform conditional reconfiguration evaluation.

The conditional reconfiguration evaluation includes:
the UE will:
for each *condReconfigld* within the *VarConditionalReconfig:*
consider a cell which has a Physical Cell Identity (PCI) matching a value indicated in *ServingCellConfigCommon* included in *reconfigurationWithSync* within received *condRRCReconfig* to be applicable cell;
for each *measId* in *measIdList* within *VarMeasConfig* indicated in *condExecutionCond* of the *condReconfigId*:
   if an entering condition applicable for this event associated with the *condReconfigId*, i.e., an event corresponding with *condEventId(s)* of corresponding *condTriggerConfig* within *VarConditionalReconfig,* is fulfilled for an applicable cell for all measurements after layer 3 filtering taken during a corresponding *timeToTrigger* defined for this event within *VarConditionalReconfig:* consider the event associated with *measId* to be fulfilled;
   if a leaving condition applicable for the event associated with the *condReconfigId*, i.e., an event corresponding with *condEventId(s)* of corresponding *condTriggerConfig* within *VarConditionalReconfig,* is fulfilled for an applicable cell for all measurements after layer3 filtering taken, during a corresponding *timeToTrigger* defined for this event within *VarConditionalReconfig:* consider the event associated to that *measId* is not fulfilled;
   if events associated to all *measId(s)* within *condTriggerConfig* for a target candidate cell within stored *condRRCReconfig* are fulfilled:
      consider the target candidate cell within the stored *condRRCReconfig,* associated to that *condReconfigld* as a triggered cell;
      initiate conditional reconfiguration execution.

The conditional reconfiguration execution includes:
the UE will:
if more than one triggered cell exists: select the triggered cell as a selected cell for conditional reconfiguration execution;
for the selected cell of conditional reconfiguration execution, apply stored *condRRCReconfig* of the selected cell.

A network provides configuration parameters for a target special cell in a *ConditionalReconfiguration* IE. In NR-DC, the UE may receive two independent *conditionalReconfigurations: a conditionalReconfiguration* associated with an MCG, which is included in an *RRCReconfiguration* message received via SRB1; and a *conditionalReconfiguration* associated with an SCG, which is included in an *RRCReconfiguration* message received via SRB3 or included within a *RRCReconfiguration* message embedded in a *RRCReconfiguration* message received via SRB 1. In this case, the UE maintains two independent *VarConditionalReconfig,* each *conditionalReconfiguration* is associated with a *VarConditionalReconfig;* unless explicitly stated otherwise, the UE independently performs all the above procedures for each *conditionalReconfiguration* and associated *VarConditionalReconfig.* For *VarConditionalReconfig* associated with the same cell group, the UE performs a measurement procedure.

As described above, the conditional reconfiguration includes two cases, i.e., Conditional Handover (CHO) and conditional PSCell change. The conditional handover is defined as a handover that is executed by a UE when one or more handover execution conditions are met. The UE starts evaluating the execution condition(s) upon receiving a CHO configuration, and stops evaluating the execution condition(s) once handover is executed.

The following principles apply to CHO:
The CHO configuration includes a configuration of CHO candidate cell(s) generated by candidate gNB(s), and execution condition(s) generated by a source gNB; and
an execution condition may include one or two triggering condition(s) (CHO event A3/A5). Only a single Reference Signal (RS) type is supported and at most two different triggering quantities (e.g., Reference Signal Received Power (RSRP) and Reference Signal Received Quality (RSRQ), RSRP and Signal to Interference plus Noise Ratio (SINR), etc.) can be configured simultaneously for the evaluation of CHO execution condition of a single candidate cell;
before any CHO execution condition is satisfied, when a handover (HO) command (without a CHO configuration) is received, the UE executes a HO procedure, regardless of any previously received CHO configuration; and
while executing CHO, i.e., from the time when the UE starts synchronization with a target cell, the UE does not monitor a source cell.

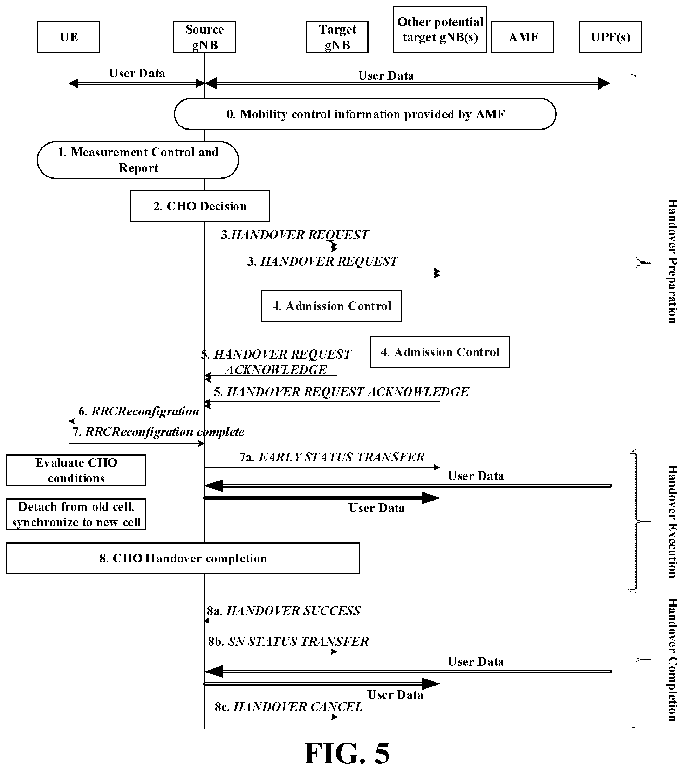

A CHO procedure within an Access and Mobility Management Function (AMF) is shown in FIG. 5, a specific procedure may be referred to related arts and is not elaborated here.

It should be noted that the above introduction to the technical background is just to facilitate a clear and complete description of technical solutions of the present disclosure, and is elaborated to facilitate understanding of those skilled in the art. It cannot be considered that the technical solutions are known by those skilled in the art just because these solutions are elaborated in Background of the present disclosure.

### SUMMARY

Inventors find that LTM as introduced in Release 18 (Rel-18) offers short interruption time, but LTM necessitates signaling exchange with a source cell beforehand, including reporting of an L1 measurement result by UE and transmission of a LTM cell switch command by a source cell, so as to perform an LTM execution procedure, which means that a terminal equipment must wait for a network order to trigger LTM. In a case of a sudden change in a radio environment, the terminal equipment may be unable to receive the order in a timely manner, thereby causing a handover failure or a radio link failure, which makes its robustness inferior to that of an L3-based mobility procedure.

For at least one of the above problems or other similar problems, embodiments of the present disclosure provide a cell switch method and a cell switch apparatus.

According to an aspect of embodiments of the present disclosure, a cell switch apparatus is provided, configured in a terminal equipment, wherein the apparatus includes:
a receiving unit configured to receive candidate configurations and execution conditions transmitted by a network device; and
a processing unit configured to perform a first action when a first condition is satisfied, the first action including applying a target configuration and not including performing a second random access procedure, and the target configuration being one of the candidate configurations transmitted by the network device that satisfies the first condition.

One of advantageous effects of embodiments of the present disclosure is that: according to embodiments of the present disclosure, the terminal equipment is able to achieve LTM execution or CHO execution triggered by the terminal equipment, and is able to obtain corresponding information to perform corresponding processing, thereby avoiding or reducing a mobility failure or a radio link failure caused by being unable to receive a trigger order from the network device, and improving robustness.

Referring to later descriptions and drawings, specific implementations of the present disclosure are disclosed in detail, indicating modes in which principles of the present disclosure may be adopted. It should be understood that implementations of the present disclosure are not limited in scope thereby. Within spirits and scopes of terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.
FIG. 1 is a schematic diagram of an inter-cell mobility scenario;
FIG. 2 is a schematic diagram of an overall procedure of LTM;
FIG. 3 is a schematic diagram of a random access procedure;
FIG. 4 is a schematic diagram of a UE behavior for conditional reconfiguration;
FIG. 5 is a schematic diagram of a CHO procedure within an AMF;
FIG. 6 is a schematic diagram of RLF/HOF recovery;
FIG. 7 is a schematic diagram of a cell switch method in embodiments of the present disclosure;
FIG. 8 is a schematic diagram of a signaling procedure of a method according to embodiments of the present disclosure;
FIG. 9 is a schematic diagram of a configuring method in embodiments of the present disclosure;
FIG. 10 is a schematic diagram of a cell switch apparatus in embodiments of the present disclosure;
FIG. 11 is a schematic diagram of a configuring apparatus in embodiments of the present disclosure;
FIG. 12 is a schematic diagram of a communication system in embodiments of the present disclosure;
FIG. 13 is a schematic diagram of a terminal equipment in embodiments of the present disclosure;
FIG. 14 is a schematic diagram of a network device in embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations in which principles of the present disclosure may be adopted. It should be understood that the present disclosure is not limited to described implementations, in contrast, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of relevantly listed terms. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, term "communication network" or "wireless communication network" may refer to a network conforming to any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system may be performed according to a communication protocol of any stage, which e.g. may include but be not limited to the following communication protocols: 1G (generation), 2G, 2.5G, 2.75G, 3G, 4G, 4.5G, 5G, New Radio (NR) and so on, and/or other communication protocols that are currently known or will be developed in future.

In embodiments of the present disclosure, term "network device" e.g. refers to a device configured to access a terminal equipment to a communication network in a communication system and provide services for the terminal equipment. A network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

A base station may include but be not limited to: a node B (NodeB or NB), an evolution node B (eNodeB or eNB) and a 5G BS (gNB), etc., and may further includes a Remote Radio Head (RRH), a Remote Radio Unit (RRU), a relay or low power node (such as femeto, pico, etc.), an Integrated Access and Backhaul (IAB) node or an IAB-DU or IAB-donor. And term "base station" may include some or all functions thereof, and each base station may provide communication coverage to a specific geographic region. Term "cell" may refer to a base station and/or a coverage area thereof, which depends on a context in which this term is used. Without causing confusion, terms "cell" and "base station" are interchangeable.

In embodiments of the present disclosure, the term "User Equipment (UE)" or "Terminal Equipment (TE) or Terminal Device" e.g. refers to a device configured to access a communication network and receive network services via a network device. A terminal equipment may be fixed or mobile, and may also be called a Mobile Station (MS), a terminal, a Subscriber Station (SS), an Access Terminal (AT), an IAB-MT (Mobile Terminal), a station and so on.

A terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under scenarios such as Internet of Things (IoT), the terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, term "network side" or "network device side" refers to a side of a network, may be a certain base station, or may include one or more of the above network devices. Term "user side" or "terminal side" or "terminal equipment side" refers to a side of a user or terminal, may be a certain UE, or may include one or more of the above terminal equipments. Unless otherwise specified herein, "device" may refer to a network device, or may refer to a terminal equipment.

In Rel-18, Layer 1 (L1)/Layer 2 (L2) triggered mobility (LTM) was introduced. Compared to Layer 3 (L3)-based mobility, LTM as introduced in Rel-18 can offer improvements in handover latency and interruption time. However, compared to L3-based mobility, LTM as introduced in Rel-18 also has a number of limitations.

For example, LTM operation is only supported for mobility between cells of the same gNB (i.e., the same Centralized Unit (CU)). Depending on deployment of a network, this greatly limits opportunities to use LTM. By enabling LTM operation between cells of different gNBs (i.e., inter-CUs), a network will be able to gain benefits of LTM for a far greater number of scenarios.

In addition, L3-based mobility employs L3 measurement reporting, which supports events evaluated by a UE to trigger measurement reports, thereby reducing signaling overhead compared to periodic measurement reporting. However, Layer 1 (L1) measurement for LTM mobility does not support such trigger events. L1 measurement in an LTM procedure is limited to Synchronization Signal/PBCH Block (SSB) measurement. Extending L1 measurement to include a Channel State Information-Reference Signal (CSI-RS) is able to address this limitation and is expected to achieve greater throughput on a target cell immediately after cell handover.

Currently, in order to eliminate the limitations of LTM as introduced in Rel-18, Rel-19 has been proposed. Objectives of Rel-19 work items include: specifying support for inter-CU L1/L2 triggered mobility (LTM), measurements related enhancements for purpose of supporting LTM, specifying support of conditional LTM, and specifying Radio Resource Management (RRM) requirements related to the above objectives as necessary.

In the above objectives, the specifying support for inter-CU L1/L2 triggered mobility (LTM) includes:
prioritizing a case when a Central Unit (CU) is acting as a Master Node (MN) when Dual Connectivity (DC) is not configured;
as a secondary priority, supporting a case when NR-DC is configured, a CU is acting as a Secondary Node (SN), and an MN is unchanged;
as a secondary priority, supporting a case when NR-DC is configured, a CU is acting as an MN, and a Secondary Cell Group (SCG) is unchanged or is released; note: a case that LTM is configured in both a Master Cell Group (MCG) and an SCG is excluded; and
according to Rel-18 LTM, specifying support for subsequent LTM mobility procedures aiming to avoid an Radio Resource Control (RRC) configuration between cell switches; and coordination with SA3 (Security Group) needed with respect to security key handling.

In the above objectives, it is worth noting that the Rel-18 intra-CU LTM procedure is considered as a baseline for adding inter-CU support.

In the above objectives, the measurements related enhancements for purpose of supporting LTM include:
the measurements related enhancements apply to intra-CU MCG/SCG LTM and inter-CU MCG/SCG LTM;
specifying necessary constituents to support event-triggered L1 measurement reporting; wherein, RAN1 and RAN2 independently advance event-triggered measurement objectives within their respective MIMO and mobility enhancement WIs; reviewing progress at RAN #105 to check whether objectives need to be modified to avoid/manage any duplicated work; and
specifying support for CSI-RS measurement of LTM procedures and ensuring CSI-RS-based beam management and/or necessary physical layer operations on other LTM candidate cells.

In the above objectives, the specifying support of conditional LTM includes:
specifying UE evaluated condition(s) for triggering LTM;
aiming to support conditional LTM including subsequent LTM;
prioritizing intra-CU LTM; and
a checkpoint to review objectives at RAN#105. Before this checkpoint, RAN WG work does not start.

In embodiments of the present disclosure, when an RLF or a Handover Failure (HOF) occurs, a terminal initiates an RRC connection re-establishment procedure, i.e., performs cell selection first; if the selected cell is a CHO candidate cell, the UE attempts CHO execution once; otherwise, if the selected cell is an LTM candidate cell, the UE attempts LTM execution once; otherwise, the UE continues the RRC connection re-establishment procedure, i.e., transmits an RRC re-establishment request message.

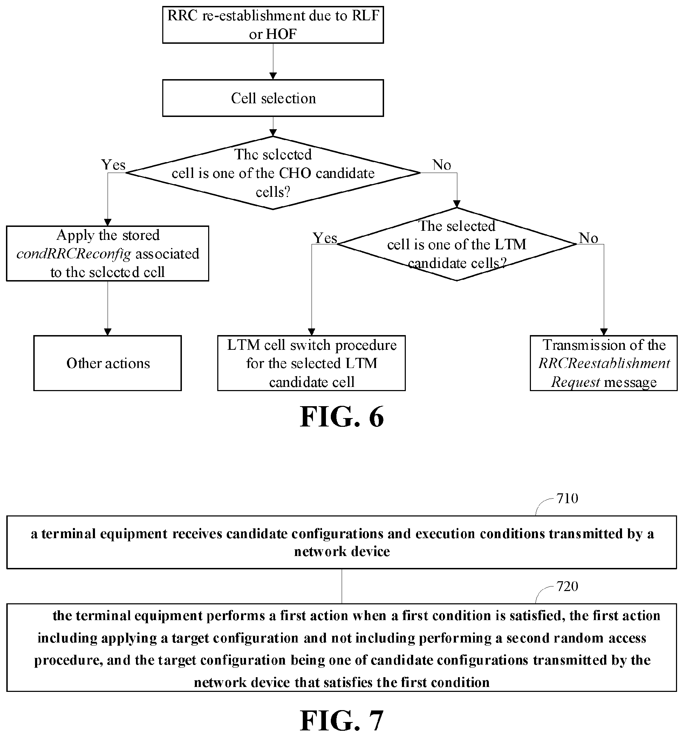

According to the above mechanism, when an RLF or a HOF occurs, if the selected cell is an LTM or CHO candidate cell, the UE attempts LTM execution or CHO execution once, as shown in FIG. 6. The CHO execution or LTM execution for RLF/HOF recovery shown in FIG. 6 may be regarded as cell switch initiated by the terminal. The LTM execution is a random access-based LTM procedure.

Seen as such, in a cell switch procedure initiated by a terminal for RLF or HOF fast recovery, or in a cell switch procedure initiated by the terminal under other conditions, a network side does not make an LTM decision, and will not transmit a cell switch command MAC CE to the terminal, resulting in the terminal being unable to obtain corresponding information. This means that the terminal needs to obtain corresponding information in or after a cell switch procedure, similar to L3 HO (e.g., L3 CHO), which makes advantages of an existing LTM procedure triggered by a network unachievable in LTM/CHO triggered by a terminal.

For the above problems, the present disclosure is proposed. Embodiments of the present disclosure are described below with reference to the drawings and specific implementations. In the following descriptions, without causing confusion, "if...", "in a case where..." and "when..." may be used interchangeably.

### Embodiments of a First Aspect

Embodiments of the present disclosure provide a cell switch method, which is described from a side of a terminal equipment.

FIG. 7 is a schematic diagram of the cell switch method in embodiments of the present disclosure, as shown in FIG. 7, the method includes:
710: a terminal equipment receives candidate configurations and execution conditions transmitted by a network device; and
720: the terminal equipment performs a first action when a first condition is satisfied, the first action including applying a target configuration and not including performing a second random access procedure, and the target configuration being one of candidate configurations transmitted by the network device that satisfies the first condition.

It is worth noting that the above FIG. 7 only schematically describes embodiments of the present disclosure, however the present disclosure is not limited thereto. For example, some other operations may be added or certain operations therein may be reduced. Those skilled in the art may make appropriate modifications according to the above contents, not being limited to records in the above FIG. 7.

In embodiments of the present disclosure, for ease of description, a random access procedure is divided into a first random access procedure and a second random access procedure. Unless otherwise specified, the first random access procedure is a random access procedure on a candidate cell, and at least includes transmitting a random access preamble on a candidate cell; and the second random access procedure is a random access procedure performed during LTM/CHO execution, and at least includes transmitting a random access preamble on a target cell and receiving a possible network response.

In the above embodiments, the candidate configuration includes a configuration of a candidate cell, and the execution condition includes a trigger condition for an event and/or parameters related to a trigger condition, such as a threshold, a maximum number, a duration of a timer, and the like. For contents related to the candidate configuration and the execution condition, related arts may be referred to, and details thereof are not described herein.

In the above embodiments, the first condition is a condition for the terminal equipment to perform the first action. The first condition may include at least one of the following: a NR suitable cell is selected in cell selection, the cell being a CHO/LTM candidate cell and being configured with a configuration that allows attempting CHO/LTM; a serving cell is poor; a candidate cell is good; a candidate cell is better than a serving cell. In the above first condition, the cell selection is initiated after an RLF or a HOF on an MCG is triggered, and this condition is a first condition corresponding to CHO/LTM execution for fast recovery after an RLF/a HOF.

In the above embodiments, the first action may be LTM execution or may further be CHO execution. For specific contents of LTM execution and CHO execution, related arts may be referred to, and details thereof are not described herein.

According to the above embodiments, the terminal equipment is able to implement LTM execution or CHO execution triggered by the terminal equipment, thereby avoiding or reducing a mobility failure or a radio link failure caused by being unable to receive a trigger order from a network device, and improving robustness.

In existing LTM mechanisms triggered by a network device, the network device indicates a (UL/DL) Transmission Configuration Indication (TCI) state of a target cell in an LTM cell switch command MAC CE to perform beam management of the target cell. However, in the first action triggered by a terminal equipment of the present solution, there is no LTM cell switch command MAC CE provided by the network device, and the terminal equipment is unable to determine a TCI state before performing the first action. This means that the terminal equipment needs to determine the TCI state during or after the first action. If the terminal equipment determines the TCI state during the first action, this increases execution time of the first action, resulting in longer service interruption. If the terminal equipment determines the TCI state after the first action, the terminal equipment may use an unsuitable beam or TCI state during a period from completion of the first action to determination of the TCI state, which increases service overhead, thereby leading to a decrease in system throughput.

For the above problems, in embodiments of the present disclosure, the terminal equipment determines the TCI state, e.g., a joint TCI state, an uplink (UL) TCI state, a downlink (DL) TCI state, etc., before performing the first action, thereby the above problems are solved.

In some embodiments, the terminal equipment determines the TCI state according to a downlink reference signal associated with the TCI state. For example, the terminal equipment determines the TCI state according to a measurement result of a downlink reference signal associated with the TCI state, e.g., L1 RSRP. For example, the terminal equipment is configured with two TCI states, a TCI state with TCI State ID =1 is associated with a QCL, the QCL including a first downlink reference signal, and a TCI state with TCI State ID =2 is associated with a QCL, the QCL including a second downlink reference signal. If L1 RSRP of the first downlink reference signal is better than L1 RSRP of the second downlink reference signal, the terminal equipment selects/determines to use the TCI state associated with the first downlink reference signal, i.e., the TCI state with TCI State ID =1; or, if L1 RSRP of the first downlink reference signal is better than a threshold, and L1 RSRP of the second downlink reference signal is worse than a threshold, the terminal equipment selects/determines to use the TCI state associated with the first downlink reference signal, i.e., the TCI state with TCI State ID =1. Similarly, the terminal equipment may determine the TCI state according to an L1 SINR of a downlink reference signal associated with the TCI state. Or, the terminal equipment may determine the TCI state according to L1 RSRP and an L1 SINR of a downlink reference signal associated with the TCI state.

In some other embodiments, the terminal equipment determines the TCI state according to a downlink reference signal determined during the first random access procedure. For example, the terminal equipment determines the TCI state by using a downlink reference signal determined during the first random access procedure. The first random access procedure here is a random access procedure on a candidate cell initiated for obtaining a UL TA on the candidate cell. For example, the terminal equipment is configured with two TCI states, a TCI state with TCI State ID =1 is associated with a QCL, the QCL including a first downlink reference signal, and a TCI state with TCI State ID =2 is associated with a QCL, the QCL including a second downlink reference signal. In the first random access procedure, if the terminal equipment transmits a random access preamble on a random access resource associated with the first downlink reference signal, the terminal equipment selects/determines to use a TCI state associated with the first downlink reference signal, i.e., the TCI state with TCI State ID =1.

In some further embodiments, the terminal equipment determines the TCI state according to a downlink reference signal of a candidate cell in terminal equipment-based TA measurement. For example, the terminal equipment is configured with two TCI states, a TCI state with TCI State ID =1 is associated with a QCL, the QCL including a first downlink reference signal, and a TCI state with TCI State ID =2 is associated with a QCL, the QCL including a second downlink reference signal. If the terminal equipment uses the first downlink reference signal of the candidate cell in UE-based TA measurement to calculate/determine a TA value of the candidate cell, the terminal equipment selects/determines to use a TCI state associated with the first downlink reference signal, i.e., the TCI state with TCI State ID =1.

In some further embodiments, the terminal equipment determines the TCI state according to first signaling transmitted by the network device including TCI state information. The first signaling may be a MAC CE or DCI, e.g., a MAC CE or DCI from a serving cell. The TCI state information may include at least one of the following: a TCI state identifier (ID), information on downlink reference signal, information on uplink reference signal, etc. The downlink reference signal here may be e.g., an SSB, a CSI-RS, etc.; and the uplink reference signal here may be e.g., a Sounding Reference Signal (SRS), etc.

In some further embodiments, the terminal equipment determines the TCI state according to a TCI state associated with the first condition. In this implementation, the candidate configurations and/or the execution conditions include beam information and a first condition associated with the beam information. Thus, when the first condition is satisfied, the terminal equipment selects/determines to use beam information/a TCI state associated with the first condition. In this implementation, the beam information/the TCI state may, for example, be included in the candidate configurations, or may be included in the execution conditions, and a first condition associated with the beam information/the TCI state may, for example, be included in the execution conditions. The present disclosure is not limited thereto.

The above text exemplarily describes a method for the terminal equipment to determine a TCI state, however the present disclosure is not limited thereto, appropriate variation(s) may be further made based on each of the above embodiments. For example, each of the above embodiments may be used individually, or one or more of the above embodiments may be combined.

In the above embodiments, according to the TCI state, the terminal equipment may perform processing related to the TCI state, for example, the terminal equipment may perform beam management of a target cell according to the TCI state, and so on.

In existing LTM mechanisms triggered by a network, a network device indicates a UL TA of a target cell in an LTM cell switch command MAC CE for UL synchronization. However, in a first action triggered by a terminal equipment of the present solution, if there is no LTM cell switch command MAC CE provided by the network device, a TA value of the target cell is unable to be provided. This means that the terminal equipment needs to obtain a UL TA value or perform UL synchronization during or after the first action. If the terminal equipment performs UL synchronization during the first action, execution time of the first action is increased, which will cause more service interruption. If the terminal equipment performs UL synchronization after the first action, the terminal equipment is unable to perform UL transmission before UL synchronization, which increases system throughput and causes greater service interruption.

For the above problems, in embodiments of the present disclosure, the terminal equipment obtains an uplink TA (UL TA) value before performing the first action.

In some embodiments, the terminal equipment may obtain the UL TA value according to terminal equipment-based TA measurement before performing the first action.

In the above embodiments, the terminal equipment obtains a TA value of the candidate cell (i.e., a target cell) by using UE-based TA measurement instead of using a random access procedure on the candidate cell.

For example, if the candidate configurations transmitted by the network device include a configuration for UE-based TA measurement, and if a configuration of a candidate cell is the same as a configuration of a serving cell, the terminal equipment is able to obtain the uplink TA value by using a method of UE-based TA measurement. In this case, the terminal equipment performs the first action, or if the candidate configurations transmitted by the network device indicate or include a configuration of the same TA or a configuration with TA being 0, the terminal equipment performs the first action; otherwise, that is, if the candidate configurations transmitted by the network device do not include the configuration for UE-based TA measurement, or if the configuration of the candidate cell is different from the configuration of the serving cell, the terminal equipment is unable to obtain the uplink TA value by using a method of UE-based TA measurement. In this case, and if the candidate configurations transmitted by the network device do not indicate or do not include the configuration of the same TA or the configuration with TA being 0, the terminal equipment performs a second action, the second action including a second random access procedure.

In the above example, the second action includes applying a target configuration, the target configuration being one of the candidate configurations transmitted by the network device that satisfies the first condition. The second action may be LTM execution or CHO execution.

According to the above embodiments, if the candidate configurations transmitted by the network device include a configuration for UE-based TA measurement, and if a configuration of a candidate cell is the same as a configuration of a serving cell, or if the candidate configurations transmitted by the network device indicate or include a configuration of the same TA or a configuration with TA being 0, the terminal equipment performs the first action (applying a target configuration, not performing second random access); otherwise, that is, if the candidate configurations transmitted by the network device do not include the configuration for UE-based TA measurement, or if the configuration of a candidate cell is different from the configuration of a serving cell, and if the candidate configurations transmitted by the network device do not indicate or do not include the configuration of the same TA or the configuration with TA being 0, the terminal equipment performs the second action (applying a target configuration, and performing second random access).

That is, if the network provides a TA value (=0 or having the same TA), or the UE-based TA measurement is configured and is the same as the configuration of a serving cell, the second device performs the first action (not including random access); wherein UE-based TA measurement is configured and is the same as the configuration of a serving cell, the second device obtains a TA via the UE-based TA measurement; on the other hand, if the network does not provide the TA value (=0 or having a same TA), and the UE-based TA measurement is not configured or is the same as a configuration of a serving cell, the second device performs the second action (including random access).

In some other embodiments, the terminal equipment may obtain the UL TA value before performing the first action via a random access procedure on a candidate cell. For example, the terminal equipment transmits a preamble to the candidate cell, and receives response information from the network, the response information including TA information or including TA information and candidate configuration information for indicating the candidate cell, e.g., a candidate configuration ID, thus the terminal equipment may determine the uplink TA value of the candidate cell according to the TA information or according to the TA information and the candidate configuration information.

In the above embodiments, the response information may, for example, include at least one of the following: a Random Access Response (RAR), a first Timing Advance Command MAC CE (TAC MAC CE), or first signaling.

In the above examples, the RAR may be transmitted by a source cell or by a candidate cell, and the RAR may include the candidate configuration information and/or the TA information. Within a first time, if the RAR is not received, the terminal equipment performs preamble retransmission. The terminal equipment considers that the random access procedure on the candidate cell is completed when receiving the RAR or when a maximum number of transmissions is reached or when maximum transmit power is reached.

In the above examples, the first TAC MAC CE may be a new MAC CE including a TAC transmitted by a source cell, and the new MAC CE may include the candidate configuration information and/or the TA information.

In the above examples, the first signaling may be transmitted by a source cell, the first signaling at least including the candidate configuration information and/or the TA information.

In the above embodiments, the candidate cell may further provide the source cell with the candidate configuration information and/or the TA information, or provide the RAR. For example, if the network that responds is a source cell, that is, if the terminal equipment receives response information from a source cell after transmitting the preamble to the candidate cell, the candidate cell transfers the candidate configuration information and/or the TA information to the source cell, or provides the RAR to the source cell, and then the source cell transmits the response information including the candidate configuration information and/or the TA information to the terminal equipment. If the source cell and the candidate cell are under different DUs of a same gNB, a DU where the candidate cell is located transfers the candidate configuration information and/or the TA information to a DU where the source cell is located by using an F1 interface via a CU. Or, if the source cell and the candidate cell are under different gNBs, a gNB/CU where the candidate cell is located transfers the candidate configuration information and/or the TA information to a gNB/CU where the source cell is located via an X2 interface.

In the above embodiments, the source cell may be a serving cell, such as a PCell or a PSCell, etc.

In the above embodiments, transmitting the preamble by the terminal equipment to the candidate cell may be triggered by a PDCCH order transmitted by the network device, or may be initiated by the terminal device itself.

In some further embodiments, the terminal equipment may obtain the UL TA value according to uplink TA information associated with the first condition before performing the first action. In this implementation, the candidate configurations and/or the execution conditions include uplink TA information and a first condition associated with the uplink TA information. Thus, when the first condition is satisfied, the terminal equipment may use UL TA information associated with the first condition.

In the above embodiments, the uplink TA information may be included in the candidate configurations, or may be included in the execution conditions, and the first condition associated with the uplink TA information may be included in the execution conditions, the present application is not limited thereto.

In the above embodiments, the UL TA information may include at least one of a TA offset value (N_{TAoffset}) and a TA value (N_{TA}), and the terminal equipment may obtain the UL TA value according to the UL TA information.

The above text exemplarily describes a method for the terminal equipment to obtain the UL TA value, however the present disclosure is not limited thereto, appropriate variation(s) may be further made based on each of the above embodiments. For example, each of the above embodiments may be used individually, or one or more of the above embodiments may be combined.

In the above embodiments, the terminal equipment may perform uplink transmission according to an obtained UL TA value, or may use it for other purposes, which is not limited herein.

In embodiments of the present disclosure, optionally, the terminal equipment determines validity of the uplink TA. For example, the first action includes determining validity of the uplink TA. That is, when the first condition is satisfied, the terminal equipment applies a target configuration and determines validity of the uplink TA.

In some embodiments, the terminal equipment determines validity of the uplink TA according to a TA timer. For example, whether the uplink TA is valid is determined according to whether the TA timer has expired. If the TA timer has expired or is not running, or although the TA timer is configured but is not running, it is considered that the uplink TA is invalid. If the TA timer has not expired or is running or is not configured, it is considered that the uplink TA is valid.

In some other embodiments, the terminal equipment determines validity of the uplink TA according to a change in L1 RSRP. For example, whether the uplink TA is valid is determined according to whether a change in L1 RSRP exceeds a first threshold. If the change in L1 RSRP exceeds the first threshold, it is considered that the uplink TA is invalid. If the change in L1 RSRP does not exceed the first threshold, it is considered that the uplink TA is valid.

In some further embodiments, the terminal equipment determines validity of the uplink TA according to a change in L3 RSRP. For example, whether the uplink TA is valid is determined according to whether a change in L3 RSRP exceeds a second threshold. If the change in L3 RSRP exceeds the second threshold, it is considered that the uplink TA is invalid. If the change in L3 RSRP does not exceed the second threshold, it is considered that the uplink TA is valid.

In the above embodiments, the RSRP may be filtered RSRP, which may be a measurement quantity of a downlink reference signal of at least one of a source cell, a candidate cell, or a target cell.

In the above embodiments, the change may be an absolute change in a downlink reference signal of at least one of a source cell, a candidate cell, or a target cell. For example, an absolute change in a DL RS of a source cell is an increased value or a decreased value of a measurement result r2 of the DL RS at t2 relative to a measurement result r1 of the DL RS at t1, or an increased value or a decreased value of a measurement result r2 of the DL RS at t2 relative to a specified or configured measurement result r0. The change may be a relative change in a downlink reference signal of a candidate cell and/or a target cell relative to a downlink reference signal of a source cell, such as a change in L1 RSRP/L3 RSRP of a DL RS of a candidate cell relative to L1 RSRP/L3 RSRP of a DL RS of a source cell, and may further be a relative change in a downlink reference signal of a source cell relative to a downlink reference signal of a candidate cell and/or a target cell, such as a change in L1 RSRP/L3 RSRP of a DL RS of a source cell relative to L1 RSRP/L3 RSRP of a DL RS of a candidate cell.

The above text exemplarily describes a method for the terminal equipment to determine validity of the uplink TA in embodiments of the present disclosure, however the present disclosure is not limited thereto, appropriate variation(s) may be further made based on each of the above embodiments. For example, each of the above embodiments may be used individually, or one or more of the above embodiments may be combined.

In the above embodiments, if the terminal equipment determines that the uplink TA is valid, the terminal equipment continues with or performs the first action; otherwise, i.e., if the terminal equipment determines that the uplink TA is invalid, the terminal equipment performs the second action. Relevant contents about the first action and the second action have been described in the preceding text, and are not elaborated here.

In the embodiments of the present disclosure, optionally, the terminal equipment uses a Dynamic Grant (DG) and/or a Configured Grant (CG) to transmit a first uplink transmission on a target cell. For example, the first action includes transmitting the first uplink transmission on the target cell. When the first condition is satisfied, the terminal equipment applies the target configuration and transmits the first UL transmission on the target cell.

In some embodiments, the first uplink transmission carries/includes an RRC Reconfiguration Complete message, or includes MAC CE for C-RNTI or a Contention Resolution ID.

In some embodiments, the terminal equipment transmits the first uplink transmission on the target cell by using a Dynamic Grant (DG).

According to existing mechanisms, a source cell determines and initiates an LTM cell switch procedure, so that a network side is able to know movement of a terminal equipment. However, for terminal equipment-triggered mobility or cell switch, the network side or a target cell is unable to know arrival of the terminal equipment, thus the target cell is unable to schedule a first UL transmission of the terminal equipment in the target cell via a dynamic grant.

For the above problems, according to embodiments of the present disclosure, after receiving a random access preamble from the terminal equipment, the target cell may transfer TA information to the source cell, and thereafter the terminal equipment may be schedule by using a dynamic grant.

In the above embodiments, the first action may further include that the terminal equipment monitors and/or receives a PDCCH of the target cell, and transmits the first uplink transmission on a uplink grant indicated by the PDCCH.

In the above embodiments, the network may configure a PDCCH occasion for the scheduling. The terminal equipment may monitor and/or receive the PDCCH on the PDCCH occasion configured by the network device. After the terminal equipment completes the first action (e.g., LTM execution), the PDCCH occasion becomes invalid, or is released, or is used for a first UL transmission in a subsequent first action (e.g., LTM execution).

In the above embodiments, when the network device (successfully) receives the first UL transmission, the network device considers that the first action (e.g., LTM execution) is completed. When the terminal equipment considers that the network device has (successfully) received the first UL transmission, the terminal equipment considers that the first action (e.g., LTM execution) is completed.

In some other embodiments, the terminal equipment transmits the first uplink transmission on the target cell by using a Configured Grant (CG).

According to existing mechanisms, the terminal equipment determines an associated configured grant according to beam information provided by the source cell in an LTM cell switch command. However, for terminal equipment-triggered mobility or cell switch, the source cell will not transmit the LTM cell switch command, resulting in the terminal equipment being unable to determine the configured grant according to existing mechanisms for the first uplink transmission of the target cell.

For the above problems, according to embodiments of the present disclosure, the terminal equipment may transmit the first uplink transmission using at least one of the following configured grants:
a valid configured grant, e.g., any valid configured grant, in this example, association between a CG and a beam (TCI state) is not configured;
a configured grant associated with a determined TCI state, a method for determining the TCI state is as described above, and will not be repeated here; or
a configured grant associated with the first condition, wherein the candidate configurations and/or the execution conditions include the configured grant and a first condition associated with the configured grant. For example, when the first condition is satisfied, the terminal equipment transmits the first UL transmission using the configured grant associated with the first condition.

In the above example, the configured grant may be included in the candidate configurations, or may be included in the execution conditions, and the first condition associated with the configured grant may be included in the execution conditions.

In some further embodiments, the terminal equipment transmits the first uplink transmission on the target cell by using a Dynamic Grant (DG) and/or a Configured Grant (CG).

For example, if there is a configured grant, the terminal equipment transmits the first uplink transmission by using the configured grant, or the terminal equipment transmits the first uplink transmission by not using the dynamic grant.

For another example, the terminal equipment transmits the first uplink transmission by using an earlier grant in the dynamic grant and the configured grant.

For another example, the terminal equipment transmits the first uplink transmission by using the dynamic grant or using the configured grant according to a configuration of network side. The present disclosure does not impose any limitation on a specific configuring method, which may be explicit configuration, for example, a network device (gNB or target cell/DU/CU) performs explicit configuration, or which may be implicit configuration, etc.

The above text exemplarily describes a method for the terminal equipment to transmit the first uplink transmission using a DG and/or a CG, however the present disclosure is not limited thereto, appropriate variation(s) may be further made based on each of the above embodiments. For example, each of the above embodiments may be used individually, or one or more of the above embodiments may be combined.

In embodiments of the present disclosure, optionally, after completing the first action, the terminal equipment retains the candidate configurations and evaluates other candidate configurations of the candidate configurations or candidate cells in the other candidate configurations, to facilitate subsequent use.

Methods in embodiments of the present disclosure are described below with reference to the drawings. In the following description, the first action being LTM execution is taken as an example, the present disclosure is not limited thereto, and the first action may further be CHO execution.

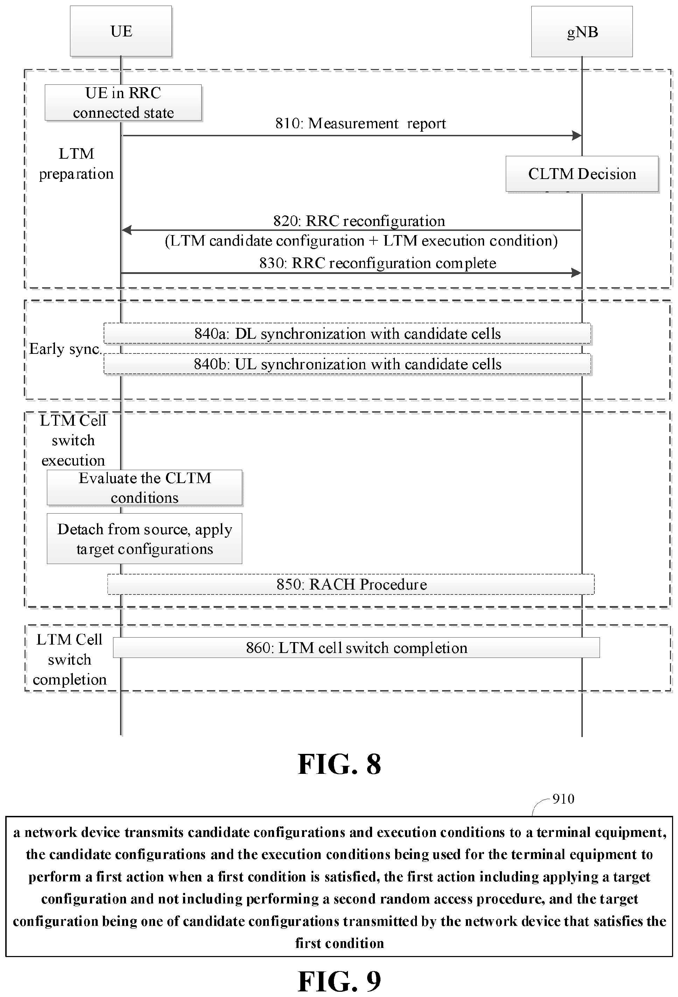

FIG. 8 is a schematic diagram of a signaling procedure of the method according to embodiments of the present disclosure. As shown in FIG. 8, the procedure includes:
810: a UE transmits a measurement report to a gNB, and the gNB makes a conditional LTM (CLTM) decision;
820: the gNB transmits an RRC Reconfiguration message to the UE, the RRC Reconfiguration message including an LTM candidate configuration and an LTM execution condition;
830: the UE transmits an RRC Reconfiguration Complete message to the gNB;
840 a/b: uplink and downlink synchronization with a candidate cell;
The UE evaluates a CLTM condition (i.e., the first condition), detaches from a source cell and applies a target configuration when the first condition is satisfied;
850: RACH procedure (optional);
860: LTM cell switch is completed.

Embodiments of the present disclosure further provide a configuring method, which is described from a side of a network device. The method is processing on a network side corresponding to the cell switch method in the above embodiments, and the same contents are not repeated.

FIG. 9 is a schematic diagram of the configuration method in the embodiments of the present disclosure. As shown in FIG. 9, the method includes:
910: a network device transmits candidate configurations and execution conditions to a terminal equipment, the candidate configurations and the execution conditions being used for the terminal equipment to perform a first action when a first condition is satisfied, the first action including applying a target configuration and not including performing a second random access procedure, and the target configuration being one of candidate configurations transmitted by the network device that satisfies the first condition.

In the above embodiments, contents regarding the candidate configurations, the execution conditions, the first condition and the first action have been described in preceding embodiments, and are not elaborated here.

In some embodiments, the network device may further transmit first signaling to the terminal equipment. The first signaling may include TCI state information, and may further include TA information. Relevant contents about the first signaling have been described in preceding embodiments, and are not elaborated here.

In some embodiments, the network device may further perform random access with the terminal equipment on a candidate cell. For example, the network device receives a preamble transmitted by the terminal equipment, and transmits a response to the terminal equipment. In addition, the network device may further transmit a PDCCH order to the terminal equipment, the PDCCH order may trigger the terminal equipment to transmit a preamble to a candidate cell. Relevant contents about the response have been described in preceding embodiments, and are not elaborated here.

In some embodiments, the network device may further configure a PDCCH occasion for the terminal equipment, the PDCCH occasion being used for the terminal equipment to monitor and/or receive a PDCCH transmitted by the network device. A configuration related to the PDCCH occasion may be included in the candidate configurations.

In some embodiments, the network device may further receive a first uplink transmission transmitted by the terminal equipment. Relevant contents about the first uplink transmission have been described in preceding embodiments, and are not elaborated here.

The above text provides an exemplary description of the method in embodiments of the present disclosure, however the present disclosure is not limited thereto, appropriate variation(s) may be further made based on each of the above embodiments. For example, each of the above embodiments may be used individually, or one or more of the above embodiments may be combined.

According to methods in embodiments of the present disclosure, the first condition serves as a trigger condition for the terminal equipment to perform the first action. In a case where the first condition is satisfied, the terminal equipment performs the first action including applying a target configuration and not including performing a second random access procedure, thereby avoiding or reducing a handover failure or a radio link failure, thus improving robustness.

### Embodiments of a Second Aspect

Embodiments of the present disclosure provide a cell switch apparatus.

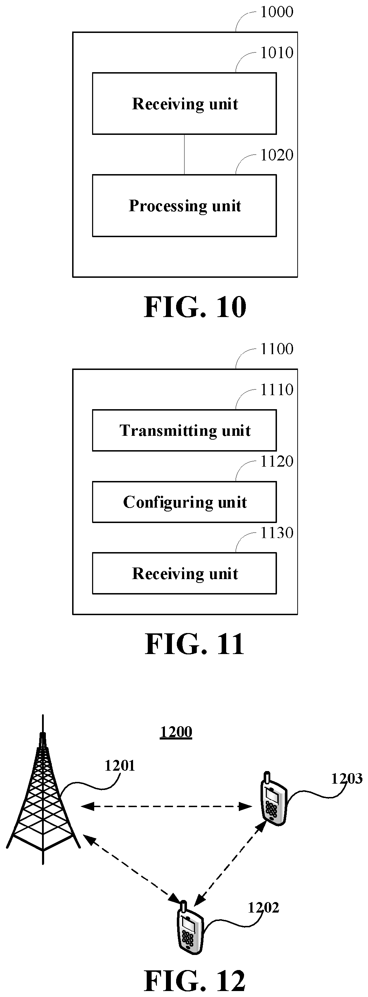

FIG. 10 is a schematic diagram of the cell switch apparatus in embodiments of the present disclosure. The apparatus may be e.g. a terminal equipment, or may be one or more parts or components configured in the terminal equipment. A principle of the apparatus to solve problems is same as the method shown in FIG. 7 in embodiments of the first aspect, thus a specific implementation thereof may refer to implementation of the method shown in FIG. 7 in embodiments of the first aspect, the same contents are not repeated.

As shown in FIG. 10, the apparatus 1000 includes:
a receiving unit 1010 configured to receive candidate configurations and execution conditions transmitted by a network device; and
a processing unit 1020 configured to perform a first action when a first condition is satisfied, the first action including applying a target configuration and not including performing a second random access procedure, and the target configuration being one of the candidate configurations transmitted by the network device that satisfies the first condition.

In embodiments of the present disclosure, the first action may be LTM execution or may be CHO execution.

In some embodiments, the processing unit 1020 determines a TCI state before performing the first action. Optionally, the processing unit 1020 may perform beam management of a target cell according to the TCI state.

In the above embodiments, the processing unit 1020 may determine the TCI state according to at least one of the following:
a downlink reference signal associated with the TCI state;
a downlink reference signal determined during a first random access procedure;
a downlink reference signal of a candidate cell in terminal equipment-based TA measurement;
first signaling transmitted by the network device including TCI state information; or
a TCI state associated with the first condition, wherein the candidate configurations and/or the execution conditions include beam information and a first condition associated with the beam information.

In the above embodiments, the TCI state information may include at least one of the following: a TCI state ID, information on downlink reference signal, or information on uplink reference signal.

In the above embodiments, the beam information may include at least one of the following: a TCI state ID, information on downlink reference signal, or information on uplink reference signal.

In the above embodiments, the downlink reference signal includes an SSB and/or a CSI-RS; the uplink reference signal includes an SRS, the present application is not limited thereto.

In some embodiments, the processing unit 1020 obtains an uplink TA value before performing the first action. Optionally, the processing unit 1020 may perform an uplink transmission according to the uplink TA value.

In the above embodiments, the processing unit 1020 may obtain the uplink TA value according to at least one of the following before performing the first action:
terminal equipment-based TA measurement;
a random access procedure on a candidate cell; or
uplink TA information associated with the first condition, wherein the candidate configurations and/or the execution conditions include uplink TA information and a first condition associated with the uplink TA information.

In the above embodiments, that the processing unit 1020 obtains the uplink TA value according to the terminal equipment-based TA measurement includes that,
if the candidate configurations transmitted by the network device include a configuration for terminal equipment-based TA measurement, and if a configuration of a candidate cell is same as a configuration of a serving cell, the processing unit 1020 obtains the uplink TA value according to the configuration for terminal equipment-based TA measurement.

In one possible implementation, if the candidate configurations transmitted by the network device include a configuration for terminal equipment-based TA measurement, and if a configuration of a candidate cell is the same as a configuration of a serving cell, or if the candidate configurations transmitted by the network device indicate or include a configuration of the same TA or a configuration with TA being 0, the terminal equipment performs the first action; otherwise, that is, if the candidate configurations transmitted by the network device do not include the configuration for terminal equipment-based TA measurement, or the configuration of a candidate cell is different from the configuration of a serving cell, and the candidate configurations transmitted by the network device do not indicate or do not include the configuration of the same TA or the configuration with TA being 0, the processing unit 1020 performs a second action, the section action including the second random access procedure.

In the above embodiments, the second action may further include applying a target configuration, the target configuration being one of the candidate configurations transmitted by the network device that satisfies the first condition.

In the above embodiments, the second action may be LTM execution or CHO execution.

In the above embodiments, that the processing unit 1020 obtains the uplink TA value according to a random access procedure on a candidate cell includes:
transmitting a preamble to the candidate cell;
receiving response information from the network, the response information including TA information or including TA information and candidate configuration information for indicating the candidate cell; and
determining the uplink TA value of the candidate cell according to the TA information or according to the TA information and the candidate configuration information.

In the above embodiments, the response information may include at least one of the following: an RAR, a first TAC MAC CE, or first signaling.

The RAR may come from a source cell or a candidate cell; the first TAC MAC CE and/or the first signaling may come from a source cell.

In the above embodiments, the TA information or the TA information and the candidate configuration information may be provided by a candidate cell to a source cell.

In the above embodiments, transmitting the preamble by the terminal equipment to the candidate cell may be triggered by a PDCCH order transmitted by the network device, or may be triggered by the terminal device autonomously.

In the above embodiments, the uplink TA information may include at least one of a TA offset value and a TA value.

In some embodiments, the processing unit 1020 determines validity of an uplink TA.

In the above embodiments, in a case where the uplink TA is valid, the processing unit 1020 continues with or performs the first action; otherwise, i.e., in a case where the uplink TA is invalid, the processing unit 1020 performs the second action. For relevant contents about the second action, the foregoing descriptions may be referred to, and details thereof are not repeated here.

In the above embodiments, the processing unit 1020 may determine validity of the uplink TA according to at least one of the following:
whether a TA timer has expired;
whether a change in L1 RSRP exceeds a first threshold; or
whether a change in L3 RSRP exceeds a second threshold.

The RSRP may be a measurement quantity of a downlink reference signal of at least one of a source cell, a candidate cell, or a target cell.

In addition, the change may be an absolute change in the downlink reference signal of at least one of a source cell, a candidate cell, or a target cell, or a relative change in the downlink reference signal of a candidate cell and/or a target cell relative to the downlink reference signal of a source cell, or a relative change in the downlink reference signal of a source cell relative to the downlink reference signal of a candidate cell and/or a target cell.

In some embodiments, the processing unit 1020 transmits a first uplink transmission on a target cell by using a dynamic grant and/or a configured grant.

In the above embodiments, that the processing unit 1020 transmits the first uplink transmission by using a dynamic grant may include e.g.,:
transmitting a random access preamble to the target cell;
monitoring and/or receiving a PDCCH of the target cell, and transmitting the first uplink transmission on an uplink grant indicated by the PDCCH.

The processing unit 1020 may monitor and/or receive the PDCCH on a PDCCH occasion configured by the network device.

After the processing unit 1020 completes LTM execution, the PDCCH occasion becomes invalid / is released or is used for a first uplink transmission in subsequent LTM execution.

In the above embodiments, that the processing unit 1020 transmits the first uplink transmission by using a configured grant may include that e.g.,:
the processing unit 1020 transmits the first uplink transmission by using at least one of the following configured grants:
a valid configured grant;
a configured grant associated with a determined TCI state; or
a configured grant associated with the first condition, wherein the candidate configurations and/or the execution conditions include configured grants and a first condition associated with the configured grants.

In the above embodiments, that the processing unit 1020 transmits the first uplink transmission by using a dynamic grant and/or a configured grant may include e.g., at least one of the following:
if there is a configured grant, the processing unit 1020 transmits the first uplink transmission by using the configured grant or transmits the first uplink transmission by not using a dynamic grant;
transmits the first uplink transmission by using an earlier grant in a dynamic grant and a configured grant; or
transmits the first uplink transmission by using a dynamic grant or using a configured grant according to a configuration of network side.

In some embodiments, after completing the first action, the processing unit 1020 may further retain the candidate configurations and evaluate other candidate configurations of the candidate configurations or candidate cells in the other candidate configurations,

Embodiments of the present disclosure further provide a configuring apparatus.

FIG. 11 is a schematic diagram of the configuring apparatus in embodiments of the present disclosure. The apparatus may be e.g. a network device, or may be one or more components or assemblies configured in the network device. A principle of the apparatus to solve problems is same as the method shown in FIG. 9 in embodiments of the first aspect, thus a specific implementation thereof may refer to implementation of the method shown in FIG. 9 in embodiments of the first aspect, the same contents are not repeated.

As shown in FIG. 11, the apparatus 1100 includes:
a transmitting unit 1110 configured to transmit candidate configurations and execution conditions to a terminal equipment, the candidate configurations and the execution conditions being used for the terminal equipment to perform a first action when a first condition is satisfied, the first action including applying a target configuration and not including performing a second random access procedure, and the target configuration being one of candidate configurations transmitted by the network device that satisfies the first condition.

In some embodiments, the transmitting unit 1110 may further transmit first signaling to the terminal equipment. The first signaling may include TCI state information, and may further include TA information. Relevant contents about the first signaling have been described in preceding embodiments, and are not elaborated here.

In some embodiments, as shown in FIG. 11, the apparatus 1100 further includes:
a configuring unit 1120 configured to configure a PDCCH occasion, the PDCCH occasion being used for the terminal equipment to monitor and/or receive a PDCCH transmitted by the network device. A configuration related to the PDCCH occasion may be included in the candidate configurations.

In some embodiments, as shown in FIG. 11, the apparatus 1100 further includes:
a receiving unit 1130 configured to receive a first uplink transmission transmitted by the terminal equipment.

In some embodiments, the receiving unit 1130 may further receive a preamble transmitted by the terminal equipment, and the transmitting unit 1110 may further transmit a response to the terminal equipment.

In the above embodiments, the transmitting unit 1110 may further transmit a PDCCH order to the terminal equipment, the PDCCH order may trigger the terminal equipment to transmit a preamble to a candidate cell.

The above text provides an exemplary description of embodiments of the present disclosure, but the present disclosure is not limited thereto, appropriate variation(s) may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The above apparatuses may further include other components or modules. For detailed contents of these components or modules, relevant technologies may be referred to. Moreover, each of the above components or modules may be implemented via a hardware facility such as a processor, a memory, a transmitter, a receiver, etc. Embodiments of the present disclosure have no limitation thereto.

According to apparatuses in embodiments of the present disclosure, the first condition serves as a trigger condition for the terminal equipment to perform the first action. In a case where the first condition is satisfied, the terminal equipment performs the first action including applying a target configuration and not including performing a second random access procedure, thereby avoiding or reducing a handover failure or a radio link failure, thus improving robustness.

### Embodiments of a Third Aspect

Embodiments of the present disclosure further provide a communication system, including a network device and a terminal equipment.

FIG. 12 is a schematic diagram of the communication system in embodiments of the present disclosure, schematically describing a situation by taking a terminal equipment and a network device as an example, and as shown in FIG. 12, the communication system 1200 may include a network device 1201 and terminal equipments 1202, 1203. For simplicity, FIG. 12 only takes two terminal equipments and one network device as an example for description, however embodiments of the present disclosure are not limited thereto.

In embodiments of the present disclosure, transmission of existing services or future implementable services may be performed between the network device 1201 and the terminal equipments 1202, 1203. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 12 shows that two terminal equipments 1202 and 1203 are all within a coverage range of the network device 1201, however the present disclosure is not limited thereto. Two terminal equipments 1202 and 1203 may be not within a coverage range of the network device 1201, or one terminal equipment 1202 is within the coverage range of the network device 1201 while the other terminal equipment 1203 is outside the coverage range of the network device 1201.

In some embodiments, the terminal equipment includes the apparatus 1000 described in embodiments of the second aspect, configured to perform the method shown in FIG. 7 in embodiments of the first aspect. Since the method has been described in details in embodiments of the first aspect, contents thereof are incorporated here and are not repeated.

Embodiments of the present disclosure further provide a terminal equipment, the terminal equipment for example may be a UE, however the present disclosure is not limited thereto, the terminal equipment may further be other terminal equipment.

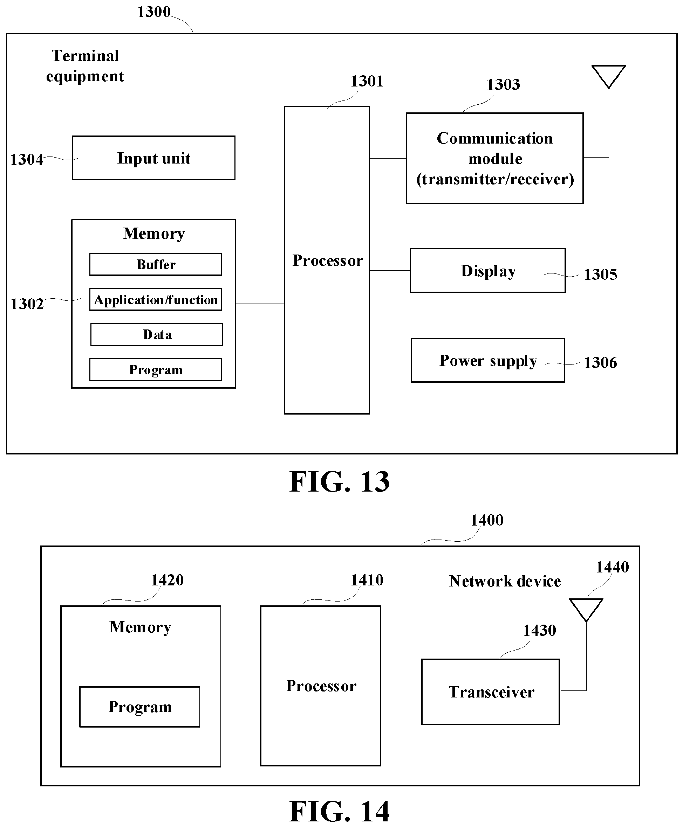

FIG. 13 is a schematic diagram of the terminal equipment in embodiments of the present disclosure. As shown in FIG. 13, the terminal equipment 1300 may include a processor 1301 and a memory 1302; the memory 1302 stores data and programs, and is coupled to the processor 1301. It is worth noting that this figure is exemplary, other types of structures may also be used to supplement or replace this structure, so as to implement a telecommunication function or other functions.

In some embodiments, functions of the apparatus 1000 in embodiments of the second aspect may be integrated into the processor 1301, wherein the processor 1301 may be configured to execute a program to implement the method described in FIG. 7 in embodiments of the first aspect, contents thereof are incorporated here and are not described repeatedly here.

In some other embodiments, the apparatus 1000 in embodiments of the second aspect may be configured separately from the processor 1301, for example the apparatus 1000 in embodiments of the second aspect may be configured as a chip connected to the processor 1301, functions of the apparatus 1000 in embodiments of the second aspect are implemented through control of the processor 1301.

As shown in FIG. 13, the terminal equipment 1300 may further include: a communication module 1303, an input unit 1304, a display 1305, and a power supply 1306. Functions of the above components are similar to related arts, and are not further elaborated here. It is worth noting that the terminal equipment 1300 does not have to include all components shown in FIG. 13, the above components are not indispensable. Moreover, the terminal equipment 1300 may further include components not shown in FIG. 13, and relevant technologies may be referred to.

Embodiments of the present disclosure further provide a network device, including a memory configured to store a computer program, and a processor configured to perform the computer program to implement the method shown in FIG. 9 in embodiments of the first aspect.

FIG. 14 is a schematic diagram of the network device in embodiments of the present disclosure. As shown in FIG. 14, the network device 1400 may include: a central processing unit (CPU) 1410 and a memory 1420, the memory 1420 being coupled to the central processing unit 1410. The memory 1420 may store various data; moreover, further stores a program for information processing, and executes the program under the control of the central processor 1410, so as to receive various information transmitted by a terminal equipment and transmit various information to the terminal equipment.

For example, the processor 1410 may be configured to execute a program to implement the method as described in FIG. 9 in embodiments of the first aspect.

In addition, as shown in FIG. 14, the network device 1400 may further include a transceiver 1430 and an antenna 1440, etc., wherein functions of said components are similar to related arts and are not further elaborated here. It is worth noting that the network device 1400 does not have to include all components shown in FIG. 14. Moreover, the network device 1400 may further include components not shown in FIG. 14, related arts may be referred to.

Embodiments of the present disclosure further provide a computer program, wherein when the program is executed in a terminal equipment, the program enables the terminal equipment to execute the method described in FIG. 7 in embodiments of the first aspect.

Embodiments of the present disclosure further provide a storage medium in which a computer program is stored, wherein the computer program enables a terminal equipment to execute the method described in FIG. 7 in embodiments of the first aspect.

Embodiments of the present disclosure further provide a computer program, wherein when the program is executed in a network device, the program enables the network device to execute the method described in FIG. 9 in embodiments of the first aspect.

Embodiments of the present disclosure further provide a storage medium in which a computer program is stored, wherein the computer program enables a network device to execute the method described in FIG. 9 in embodiments of the first aspect.

Apparatuses and methods in the present disclosure may be implemented by hardware, or may be implemented by combining hardware with software. The present disclosure relates to such a computer readable program that when the program is executed by a logic component, the logic component is able to implement apparatuses described in the above text or a constituent component, or the logic component is able to implement various methods or steps described in the above text. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Those skilled in the art may make various variations and amendments to the present disclosure according to spirits and principles of the present disclosure, these variations and amendments are also within scopes of the present disclosure.

As for implementations including the above embodiments, the following supplements are further disclosed:
1. A cell switch method, wherein the method includes that:
   a terminal equipment receives candidate configurations and execution conditions transmitted by a network device; and
   the terminal equipment performs a first action when a first condition is satisfied, the first action including applying a target configuration and not including performing a second random access procedure, and the target configuration being one of the candidate configurations transmitted by the network device that satisfies the first condition.
2. The method according to supplement 1, wherein the method further includes that:
   the terminal equipment determines a TCI state before performing the first action; and
   the terminal equipment performs beam management of a target cell according to the TCI state.
3. The method according to supplement 2, wherein the terminal equipment determines the TCI state according to at least one of the following:
   a downlink reference signal associated with the TCI state;
   a downlink reference signal determined during a first random access procedure;
   a downlink reference signal of a candidate cell in terminal equipment-based TA measurement;
   first signaling transmitted by the network device including TCI state information; or
   a TCI state associated with the first condition, wherein the candidate configurations and/or the execution conditions include beam information and a first condition associated with the beam information;
   wherein
   the TCI state information includes at least one of the following: a TCI state ID, information on downlink reference signal, or information on uplink reference signal;
   the beam information includes at least one of the following: a TCI state ID, information on downlink reference signal, or information on uplink reference signal;
   the downlink reference signal includes an SSB and/or a CSI-RS; and
   the uplink reference signal includes an SSB.
4. The method according to any one of supplements 1 to 3, wherein the method further includes that:
   the terminal equipment acquires an uplink TA value before performing the first action; and
   the terminal equipment performs uplink transmission according to the uplink TA value.
5. The method according to supplement 4, wherein that the terminal equipment acquires the uplink TA value according to at least one of the following before performing the first action:
   terminal equipment-based TA measurement; and/or
   a random access procedure on a candidate cell; and/or
   uplink TA information associated with the first condition, wherein the candidate configurations and/or the execution conditions include uplink TA information and a first condition associated with the uplink TA information.
6. The method according to supplement 5, wherein that the terminal equipment acquires the uplink TA value according to the terminal equipment-based TA measurement includes that:
   if the candidate configurations transmitted by the network device include a configuration for terminal equipment-based TA measurement, and if the configuration of the candidate cell is same as a configuration of a serving cell, the terminal equipment acquires the uplink TA value according to the configuration for terminal equipment-based TA measurement;
   if the candidate configurations transmitted by the network device include a configuration for terminal equipment-based TA measurement, and if the configuration of the candidate cell is same as a configuration of a serving cell; or, if the candidate configurations transmitted by the network device indicate or include a configuration with the same TA or a configuration with a TA being 0, the terminal equipment performs the first action; and
   if the candidate configurations transmitted by the network device do not include a configuration for terminal equipment-based TA measurement, or if the configuration of the candidate cell is different from a configuration of a serving cell, and the candidate configurations transmitted by the network device do not indicate or do not include a configuration with the same TA or a configuration with a TA being 0, the terminal equipment performs a second action, the second action including the second random access procedure.
7. The method according to supplement 6, wherein,
   the second action is LTM execution or CHO execution.
8. The method according to supplement 5, wherein that the terminal equipment acquires the uplink TA value according to the random access procedure on a candidate cell includes that:
   the terminal equipment transmits a preamble to a candidate cell;
   the terminal equipment receives response information from a network, the response information including TA information or including TA information and candidate configuration information for indicating the candidate cell; and
   the terminal equipment determines the uplink TA value of the candidate cell according to the TA information or according to the TA information and the candidate configuration information;
   wherein,
   the response information includes at least one of the following: an RAR, a first TAC MAC CE, or first signaling, the RAR comes from a source cell or a candidate cell, the first TAC MAC CE and/or the first signaling come(s) from a source cell;
   the TA information or the TA information and the candidate configuration information is/are provided by a candidate cell to a source cell; and
   the TA information includes at least one of a TA offset value and a TA value.
9. The method according to any one of supplements 1 to 8, wherein the method further includes that:
   the terminal equipment transmits a first uplink transmission on a target cell by using a dynamic grant and/or a configured grant;
   wherein, that the terminal equipment transmits the first uplink transmission by using the dynamic grant includes that:
      the terminal equipment transmits a random access preamble to the target cell; and
      the terminal equipment monitors and/or receives a PDCCH of the target cell, and transmits the first uplink transmission on an uplink grant indicated by the PDCCH.
10. The method according to supplement 9, wherein,
   the terminal equipment monitors and/or receives the PDCCH on a PDCCH occasion configured by the network device; and
   after the terminal equipment completes LTM execution, the PDCCH occasion becomes invalid / is released or is used for a first uplink transmission in subsequent LTM execution.

## Claims

1. A cell switch apparatus, configured in a terminal equipment, wherein the apparatus comprises:
a receiving unit configured to receive a candidate configuration and an execution condition transmitted by a network device; and
a processing unit configured to perform a first action when a first condition is satisfied, the first action comprising applying a target configuration and not comprising performing a second random access procedure, and the target configuration being one configuration that satisfies the first condition in the candidate configuration transmitted by the network device.

2. The apparatus according to claim 1, wherein,
the first action is L1 or L2 Triggered Mobility (LTM) execution or Conditional Handover (CHO) execution.

3. The apparatus according to claim 1, wherein,
the processing unit is further configured to determine a Transmission Configuration Indication (TCI) state before performing the first action.

4. The apparatus according to claim 3, wherein the processing unit determines the TCI state according to at least one of the following:
a downlink reference signal associated with the TCI state;
a downlink reference signal determined during a first random access procedure;
a downlink reference signal of a candidate cell in terminal equipment-based Time Advance (TA) measurement;
first signaling transmitted by the network device comprising TCI state information; or
a TCI state associated with the first condition, wherein the candidate configuration and/or the execution condition comprise beam information and a first condition associated with the beam information.

5. The apparatus according to claim 1, wherein,
the processing unit is further configured to acquire an uplink TA value before performing the first action.

6. The apparatus according to claim 5, wherein that the processing unit is configured to acquire the uplink TA value before performing the first action comprises:
acquiring the uplink TA value according to terminal equipment-based TA measurement; and/or,
acquiring the uplink TA value according to a random access procedure on a candidate cell; and/or,
acquiring the uplink TA value according to uplink TA information associated with the first condition, wherein the candidate configuration and/or the execution condition comprise uplink TA information and a first condition associated with the uplink TA information.

7. The apparatus according to claim 6, wherein that the processing unit is configured to acquire the uplink TA value according to terminal equipment-based TA measurement comprises that:
if the candidate configuration transmitted by the network device comprise a configuration for terminal equipment-based TA measurement, and if the configuration of a candidate cell is the same as a configuration of a serving cell, the processing unit acquires the uplink TA value according to the configuration for terminal equipment-based TA measurement.

8. The apparatus according to claim 7, wherein,
if the candidate configuration transmitted by the network device do not comprise a configuration for terminal equipment-based TA measurement, or if the configuration of the candidate cell is different from a configuration of a serving cell, and the candidate configuration transmitted by the network device do not indicate or do not comprise a configuration with the same TA or a configuration with a TA being 0, the processing unit performs a second action, the second action comprising the second random access procedure.

9. The apparatus according to claim 8, wherein,
the second action comprises applying a target configuration, the target configuration being one configuration that satisfies the first condition in the candidate configuration transmitted by a network device.

10. The apparatus according to claim 6, wherein that the processing unit is configured to acquire the uplink TA value according to a random access procedure on a candidate cell comprises that:
the processing unit transmits a preamble to a candidate cell;
the processing unit receives response information from a network, the response information comprising TA information or comprising TA information and candidate configuration information for indicating the candidate cell; and
the processing unit determines the uplink TA value of the candidate cell according to the TA information or according to the TA information and the candidate configuration information.

11. The apparatus according to claim 10, wherein,
the response information comprises at least one of the following: a Random Access Response (RAR), a first Time Advance Command Medium Access Control Control Element (TAC MAC CE), or first signaling.

12. The apparatus according to claim 10, wherein,
transmitting, by the processing unit, a preamble to a candidate cell is triggered by a Physical Downlink Control Channel (PDCCH) order transmitted by the network device or is triggered by the terminal equipment.

13. The apparatus according to claim 1, wherein,
the processing unit is further configured to determine validity of an uplink TA.

14. The apparatus according to claim 13, wherein,
if the uplink TA is valid, the processing unit continues or performs the first action.

15. The apparatus according to claim 13, wherein,
if the uplink TA is invalid, the processing unit performs a second action.

16. The apparatus according to claim 13, wherein the processing unit determines validity of uplink TA according to at least one of the following:
whether a TA timer has expired;
whether a change in Layer 1 Reference Signal Received Power (L1 RSRP) exceeds a first threshold; or
whether a change in Layer 3 Reference Signal Received Power (L3 RSRP) exceeds a second threshold.

17. The apparatus according to claim 1, wherein,
the processing unit is further configured to transmit a first uplink transmission on a target cell by using a dynamic grant and/or a configured grant.

18. The apparatus according to claim 17, wherein that the processing unit transmits a first uplink transmission by using a configured grant comprises that:
the processing unit transmits the first uplink transmission by using at least one of the following configured grants:
a valid configured grant;
a configured grant associated with a determined TCI state; or
a configured grant associated with the first condition, wherein the candidate configuration and/or the execution condition comprise configured grant(s) and a first condition associated with the configured grant(s).

19. The apparatus according to claim 17, wherein that the processing unit transmits a first uplink transmission by using a dynamic grant and/or a configured grant comprises at least one of the following:
if there is a configured grant, the processing unit transmits the first uplink transmission by using the configured grant or transmits the first uplink transmission by not using the dynamic grant;
transmits the first uplink transmission by using an earlier grant in the dynamic grant and the configured grant; or
transmits the first uplink transmission by using a dynamic grant or using a configured grant according to a configuration of network side.

20. The apparatus according to claim 1, wherein,
after completing the first action, the processing unit retains the candidate configuration and evaluates other candidate configuration(s) in the candidate configuration or candidate cell(s) in the other candidate configuration(s).
